(19) **Europäisches Patentamt / European Patent Office / Office européen des brevets**

(11) **EP 3 853 281 B1**

(12) **EUROPÄISCHE PATENTSCHRIFT**

(45) Veröffentlichungstag und Bekanntmachung des Hinweises auf die Patenterteilung:
**03.08.2022   Patentblatt 2022/31**

(21) Anmeldenummer: **19765479.1**

(22) Anmeldetag: **09.09.2019**

(51) Internationale Patentklassifikation (IPC):
**C08G 59/50** (2006.01)   **C08G 59/56** (2006.01)

(52) Gemeinsame Patentklassifikation (CPC):
**C08G 59/5026; C08G 59/56**

(86) Internationale Anmeldenummer:
**PCT/EP2019/073940**

(87) Internationale Veröffentlichungsnummer:
**WO 2020/058017 (26.03.2020 Gazette 2020/13)**

(54) **HÄRTERZUSAMMENSETZUNG FÜR EINE EPOXIDHARZMASSE, EPOXIDHARZMASSE UND MEHRKOMPONENTEN-EPOXIDHARZSYSTEM**

CURING AGENT COMPOSITION FOR AN EPOXY RESIN COMPOSITION, EPOXY RESIN COMPOSITION AND MULTI-COMPONENT EPOXY RESIN SYSTEM

COMPOSITION DURCISSANTE POUR UNE MASSE DE RÉSINE ÉPOXY, MASSE DE RÉSINE ÉPOXY ET SYSTÈME DE RÉSINE ÉPOXY MULTICOMPOSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2018   EP 18195415**

(43) Veröffentlichungstag der Anmeldung:
**28.07.2021   Patentblatt 2021/30**

(73) Patentinhaber: **Hilti Aktiengesellschaft**
**9494 Schaan (LI)**

(72) Erfinder:
• **BEHRENS, Nicole**
**81245 München (DE)**
• **BORNSCHLEGL, Alexander**
**81245 München (DE)**
• **PACHMAYR, Ursula**
**86916 Kaufering (DE)**
• **WIESMEIER, Cornelia**
**82284 Grafrath (DE)**
• **PILLAR, Jeremia**
**86899 Landsberg am Lech (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A1- 2 826 798      EP-A1- 3 178 861**
**WO-A1-2013/154785**

**Beschreibung**

Die Erfindung betrifft eine Härterzusammensetzung für eine Epoxidharzmasse zur chemischen Befestigung von Konstruktionselementen, eine Epoxidharzmasse und ein Mehrkomponenten-Epoxidharzsystem. Die Erfindung betrifft ferner ein Verfahren zur chemischen Befestigung von Konstruktionselementen in Bohrlöchern. Die Erfindung betrifft auch die Verwendung eines Salzes (S) als Beschleuniger in einer Epoxidharzmasse zur chemischen Befestigung, wobei die Epoxidharzmasse 3-Aminomethyl-3,5,5-trimethylcyclohexan und mindestens ein weiteres gegenüber Epoxidgruppen reaktives cycloaliphatisches Amin umfasst.

Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet. Die Anwendung von bekannten Mörtelmassen in Ländern mit hohen Temperaturen, wie beispielsweise die Vereinigten Arabischen Emirate, ist jedoch stark limitiert, da bereits ab einer Temperatur von 35 °C die Belastbarkeit (Versagenslasten) der Mörtelmassen abnehmen. Des Weiteren wirken sich hohe Temperaturen negativ auf die Handhabbarkeit und die Verarbeitungsdauer der Mörtelmassen auf den Baustellen aus. EP2826798 A1 offenbart die Verwendung einer Mehrkomponenten-Mörtelmasse auf Epoxid-Amin-Basis.

Mörtelmassen auf Epoxid-Amin-Basis weisen generell eine langsame Aushärtekinetik, eine verlängerte Topf- bzw. Gelzeit sowie gewöhnlich eine geringe Wärmebeständigkeit und Kriechfestigkeit auf. Dies führt dazu, dass sie nur in einem engen Temperaturbereich gut handhabbar sind und gute Lastwerte erreichen. Das Einstellen der Aushärtezeit von Mörtelmassen auf Epoxid-Amin-Basis erfolgt in der Regel durch die Auswahl eines entsprechenden Amins und/oder durch Zugabe von Katalysatoren wie beispielsweise tertiären Aminen, Alkoholen und Säuren. Diese Substanzen, die als Beschleuniger verwendet werden können, haben aufgrund der zugesetzten Menge und ihren Eigenschaften einen Einfluss auf die Rezeptur der Epoxidharzmasse. Eine Änderung der Anteile von Komponenten in der Mörtelmasse hat in der Regel jedoch deutliche Veränderungen der Endeigenschaften der ausgehärteten Mörtelmasse zur Folge und führt nicht selten zu Problemen bei den applikationsrelevanten Eigenschaften. Insbesondere sind hier häufig eine Reduktion der Lastwerte des ausgehärteten Mörtels zu beobachten.

Der Einsatz von Aminen, welche Aminogruppen an sekundären Kohlenstoffatomen aufweisen, wie beispielsweise 3-Aminomethyl-3,5,5-trimethylcyclohexylamin (Isophorondiamin, IPDA) als Härter in Mörtelmassen auf Epoxid-Amin-Basis ist derzeit stark begrenzt, da diese Mörtelmassen Aushärtezeiten von mehr als 24 Stunden aufweisen. Diese langen Aushärtezeiten sind auf der Baustelle nicht praktikabel, da sie die weiteren Arbeiten verzögern. Eine Beschleunigung der Aushärtezeit ist sinnvoll, um Wartezeiten vor dem nächsten Arbeitsschritt zu verkürzen. Es wäre wünschenswert entsprechend langsam härtende Amine bei der Formulierung von Mörtelmassen berücksichtigen zu können, da sich damit das Eigenschaftsprofil einer Mörtelmasse variabler gestalten ließe.

Aufgabe der Erfindung ist es daher eine Epoxidharzmasse bereitzustellen, die 3-Aminomethyl-3,5,5-trimethylcyclohexylamin enthält und für Befestigungszwecke geeignet ist. Im Vergleich zu herkömmlichen Mörtelmassen soll eine verkürzte Aushärtedauer bei vergleichbar hoher Auszugsfestigkeit erreicht werden. Es ist insbesondere Aufgabe der vorliegenden Erfindung eine Epoxidharzmasse bereitzustellen, die im Vergleich zu herkömmlichen Mörtelmassen eine verkürzte Aushärtedauer aufweist und eine verbesserte Auszugsfestigkeit bei erhöhten Temperaturen, wie beispielsweise in einem Temperaturbereich von 40 °C bis 120 °C aufweist. Des Weiteren ist es wünschenswert, dass die Epoxidharzmasse im Vergleich zu herkömmlichen Mörtelmassen auf Epoxid-Amin Basis eine verbesserte Auszugsfestigkeit in wassergefüllten Bohrlöchern zeigt.

Die der Erfindung zugrundeliegende Aufgabe wird durch Bereitstellung einer Härterzusammensetzung gemäß Anspruch 1 gelöst. Bevorzugte Ausführungsformen der erfindungsgemäßen Härterzusammensetzung sind in den Unteransprüchen angegeben, die wahlweise miteinander kombiniert werden können.

Gegenstand der Erfindung ist ferner eine Epoxidharzmasse gemäß Anspruch 10 und ein Mehrkomponenten-Epoxidharzsystem nach Anspruch 12. Bevorzugte Ausführungsformen der erfindungsgemäßen Epoxidharzmasse und des Mehrkomponenten-Epoxidharzsystems sind in den Unteransprüchen angegeben, die wahlweise miteinander kombiniert werden können.

Gegenstand der Erfindung ist ferner ein Verfahren zur chemischen Befestigung von Konstruktionselementen in Bohrlöchern gemäß Anspruch 14.

Die Erfindung umfasst ferner die Verwendung mindestens eines Salzes (S) als Beschleuniger in einer Epoxidharzmasse gemäß Anspruch 15.

Erfindungsgemäß wird eine Härterzusammensetzung für eine Epoxidharzmasse bereitgestellt, die als Härter 3-Aminomethyl-3,5,5-trimethylcyclohexan und mindestens ein weiteres gegenüber Epoxidgruppen reaktives cycloaliphatisches Amin umfasst, wobei 3-Aminomethyl-3,5,5-trimethylcyclohexan in einem Anteil von mindestens 10 Gew.-% bezogen auf das Gesamtgewicht aller gegenüber Epoxidgruppen reaktiven Aminen in der Härterzusammensetzung enthalten ist. Ferner umfasst die Härterzusammensetzung mindestens ein Salz (S) als Beschleuniger, wobei das als Beschleuniger verwendete Salz (S) aus der Gruppe bestehend aus Salzen der Salpetersäure, Salzen der Salpetrigen Säure, Salzen der Halogene, Salzen der Trifluormethansulfonsäure und Kombinationen davon ausgewählt wird.

Die Verwendung der erfindungsgemäßen Härterzusammensetzung in einer Epoxidharzmasse für Befestigungszwecke führt zu einer erheblichen Beschleunigung der Aushärtereaktion. Die gehärteten Massen zeigen eine hervorragende Auszugsfestigkeit bei erhöhten Temperaturen und können bereits nach kurzer Zeit, innerhalb von etwa 4 bis 6 Stunden, und teilweise sogar noch früher, belastet werden. Somit eignet sich die erfindungsgemäße Härterzusammensetzung sowie die daraus hergestellten Epoxidharzmassen insbesondere für die Anwendung in Ländern mit hohen Temperaturen. Ferner zeigen die gehärteten Massen eine hervorragende Auszugsfestigkeit im wassergefüllten Bohrloch.

Im Sinne der Erfindung haben die hier und in der nachfolgenden Beschreibung verwendeten Begriffe die folgende Bedeutung:

"*aliphatische Verbindungen*" sind acyclische oder cyclische, gesättigte oder ungesättigte Kohlenstoffverbindungen, ausgenommen aromatische Verbindungen;

"*cycloaliphatische Verbindungen*" sind Verbindungen mit einer carbocyclischen Ringstruktur, ausgenommen Benzolderivate oder andere aromatische Systeme;

"*araliphatische Verbindungen*" sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist;

"*aromatische Verbindungen*" sind Verbindungen, die der Hückel (4n+2)-Regel folgen;

"*Amine*" sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)): und

"*Salze*" sind Verbindungen, die aus positiv geladenen Ionen (Kationen) und negativ geladenen Ionen (Anionen) aufgebaut sind. Zwischen diesen Ionen liegen ionische Bindungen vor. Der Ausdruck "*Salze der Salpetersäure*" beschreibt Verbindungen, die von Salpetersäure ($HNO_3$) abgeleitet werden und als Anion ein Nitrat ($NO_3^-$) umfassen. Der Ausdruck "*Salze der Salpetrige Säure*" beschreibt Verbindungen, die von der Salpetrigen Säure ($HNO_2$) abgeleitet werden und als Anion ein Nitrit ($NO_2^-$) umfassen. Der Ausdruck "*Salze der Halogene*" beschreibt Verbindungen, die als Anion ein Element der 7. Hauptgruppe des Periodensystems umfassen. Insbesondere sind unter dem Ausdruck der "*Salze der Halogene*" solche Verbindungen zu verstehen, die die als Anion ein Fluorid ($F^-$), Chlorid ($Cl^-$), ein Bromid (Br) oder Iodid ($I^-$) umfassen. Der Ausdruck "*Salze der Trifluormethansulfonsäure*" beschreibt Verbindungen, die von der Trifluormethansulfonsäure ($CF_3SO_3H$) abgeleitet werden und als Anion ein Triflat ($CF_3SO_3^-$) umfassen. Der Begriff Salz im Sinne der vorliegenden Erfindung umfasst auch die entsprechenden Hydrate der Salze. Die Salze (S), welche als Beschleuniger eingesetzt werden, werden auch als Salze im Sinne der vorliegenden Erfindung bezeichnet.

Erfindungsgemäß umfasst die Härterzusammensetzung als Härter eine Kombination enthaltend 3-Aminomethyl-3,5,5-trimethylcyclohexan und mindestens ein weiterens gegenüber Epoxidgruppen reaktives cycloaliphatisches Amin.

3-Aminomethyl-3,5,5-trimethylcyclohexan ist ein cycloaliphatisches Amin, welches auch unter dem Namen Isophorondiamin oder unter der Abkürzung IPDA bekannt ist. Erfindungsgemäß umfasst die Härterzusammensetzung mindestens 10 Gew.-% an 3-Aminomethyl-3,5,5-trimethylcyclohexan bezogen auf das Gesamtgewicht aller gegenüber Epoxidgruppen reaktiven Aminen, die in der Härterzusammensetzung enthalten sind. Vorzugsweise umfasst die Härterzusammensetzung mindestens 25 Gew.-%, bevorzugt mindestens 35 Gew.-% und weiter bevorzugt mindestens 50 Gew.-% an 3-Aminomethyl-3,5,5-trimethylcyclohexan bezogen auf das Gesamtgewicht aller gegenüber Epoxidgruppen reaktiven Aminen, die in der Härterzusammensetzung enthalten sind. In einer bevorzugten Ausführungsform beträgt der Anteil an 3-Aminomethyl-3,5,5-trimethylcyclohexan am Gesamtgewicht aller gegenüber Epoxidgruppen reaktiven Aminen 10 bis 90 Gew.-%, bevorzugter 25 bis 80 Gew.-% und ganz besonders bevorzugt 50 bis 70 Gew.-%.

Das mindestens eine weitere gegenüber Epoxidgruppen reaktive cycloaliphatische Amin ist verschieden von 3-Aminomethyl-3,5,5-trimethylcyclohexan. Wenn im Sinne der vorliegenden Erfindung von einem cycloaliphatischen Amin die Rede ist, bezeichnet dies das weitere gegenüber Epoxidgruppen reaktiven cycloaliphatische Amin und nicht 3-Aminomethyl-3,5,5-trimethylcyclohexan. Das cycloaliphatische Amin weist bevorzugt im Mittel mindestens zwei an ein Stickstoffatom gebundene reaktive Wasserstoffatome pro Molekül auf. Vorzugsweise weist das cycloaliphatische Amin mindestens eine Cyclohexylgruppe (Cycloalkylgruppe mit 6 Kohlenstoffenatomen) auf.

Bevorzugte cycloaliphatische Amine sind 4-Methyl-cyclohexan-1,3-diamin, (Bicyclo[2.2.1heptanbis(methyl-amin)) (PRO-NBDA), 1,2-Diaminocyclohexan, 1,3-Cyclohexan-bis(methyl-amin) (1,3-BAC) und 4,4'-Methylenbis(cyclohexyl-amin) (PACM), wobei insbesondere 1,3-Cyclo-hexan-bis(methyl-amin) und 4,4'-Methylenbis(cyclohexyl-amin) bevorzugt sind.

Vorzugsweise beträgt der Anteil des gegenüber Epoxidgruppen reaktiven cycloaliphatischen Amins am Gesamtgewicht aller gegenüber Epoxidgruppen reaktiven Aminen in der Härterzusammensetzung $\geq$ 1 Gew.-% bis 90 Gew.-%, bevorzugt 10 bis 70 Gew.-%, bevorzugter 30 bis 50 Gew.-%.

Das cycloaliphatische Amin kann sowohl einzeln als auch im Gemisch von zwei oder mehreren der genannten cycloaliphatischen Aminen eingesetzt werden. In einer bevorzugten Ausführungsform umfasst die Härterzusammensetzung 3-Aminomethyl-3,5,5-trimethylcyclohexan sowie ein weiteres gegenüber Epoxidgruppen reaktives cycloaliphatisches Amin. Vorzugsweise ist das eine weitere gegenüber Epoxidgruppen reaktive cycloaliphatische Amin ausgewählt aus 1,3-Cyclohexan-bis(methyl-amin) und 4,4'-Methylenbis(cyclohexyl-amin).

Bei einer Kombination von 3-Aminomethyl-3,5,5-trimethylcyclohexan mit 1,3-Cyclohexan-bis(methyl-amin) in der Härterzusammensetzung ist es bevorzugt, dass 1,3-Cyclohexan-bis(methyl-amin) in einem Anteil von 10 bis 90 Gew.-%, bevorzugt in einem Anteil von 30 bis 50 Gew.-%, am Gesamtgewicht aller gegenüber Epoxidgruppen reaktiven Aminen enthalten ist. Bei einer Kombination von 3-Aminomethyl-3,5,5-trimethylcyclohexan mit 4,4'-Methylenbis(cyclohexyl-amin) in der Härterzusammensetzung ist es bevorzugt, dass 4,4'-Methylenbis(cyclohexyl-amin) in einem Anteil von 10 bis 80 Gew.-%, bevorzugt in einem Anteil von 30 bis 50 Gew.-%, am Gesamtgewicht aller gegenüber Epoxidgruppen reaktiven Aminen enthalten ist.

In einer anderen bevorzugten Ausführungsform umfasst die Härterzusammensetzung 3-Aminomethyl-3,5,5-trimethylcyclohexan sowie mehr als ein weiteres, vorzugsweise zwei weitere, gegenüber Epoxidgruppen reaktive cycloaliphatische Amine. Hierbei ist es bevorzugt, dass mindestens eines der zwei cycloaliphatischen Amine ausgewählt ist aus 1,3-Cyclohexan-bis(methyl-amin) und 4,4'-Methylenbis(cyclohexyl-amin). Vorzugsweise umfasst die Härterzusammensetzung eine Kombination aus 3-Aminomethyl-3,5,5-trimethylcyclohexan mit 1,3-Cyclohexan-bis(methyl-amin) und 4,4'-Methylenbis(cyclohexyl-amin).

Die Härterzusammensetzung kann zu der zuvor beschriebenen Kombination enthaltend 3-Aminomethyl-3,5,5-trimethylcyclohexan und mindestens ein weiteres gegenüber Epoxidgruppen reaktives cycloaliphatisches Amin, zusätzlich ein oder mehrere gegenüber Epoxidgruppen reaktive Amine umfassen, welches aus der aus aliphatischen, alicyclischen, araliphatischen und aromatischen Aminen bestehenden Gruppe ausgewählt ist. Entsprechend verwendbare Amine sind dem Fachmann grundsätzlich bekannt. Bevorzugt ist das Amin ein Polyamin mit mindestens zwei Aminogruppen im Molekül. Bei Verwendung von Polyaminen in der Härterzusammensetzung können besonders stabile Netzwerke erhalten werden.

Beispiele für geeignete Amine sind im Folgenden angegeben: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1, 6-diaminohexan und Gemische davon (TMD), 1,2-Bis(aminomethyl)cyclohexan, Hexamethylendiamin (HMD), 1,4-Diaminocyclohexan (1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0$^{2,6}$]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin. Die vorgenannten Amine können in einer Menge bis zu 20 Gew.-% bezogen auf das Gesamtgewicht aller gegenüber Epoxidgruppen reaktiven Aminen in der Härterzusammensetzung enthalten sein.

Der Anteil aller gegenüber Epoxidgruppen reaktiven Amine in der Härterzusammensetzung beträgt vorzugsweise von 30 bis 98 Gew.-%, bevorzugt von 40 bis 98 Gew.-%, bezogen auf das Gesamtgewicht der Härterzusammensetzung.

Erfindungsgemäß enthält die Härterzusammensetzung als Beschleuniger mindestens ein Salz (S). Das Salz (S) ist erfindungsgemäß mindestens ein Salz ausgewählt aus der Gruppe bestehend aus Salzen der Salpetersäure, Salzen der Salpetrigen Säure, Salzen der Halogene, Salzen der Trifluormethansulfonsäure sowie Kombinationen davon. Vorzugsweise ist das Salz (S) mindestens ein Salz ausgewählt aus der Gruppe bestehend aus Salzen der Salpetersäure, Salzen der Halogene, Salzen der Trifluormethansulfonsäure sowie Kombinationen davon. Es hat sich als besonders bevorzugt herausgestellt, dass das Salz (S) ausgewählt ist aus der Gruppe bestehend aus Nitraten ($NO_3^-$), Iodiden ($I^-$), Triflaten ($CF_3SO_3^-$) sowie Kombinationen davon.

Als Salze der Salpetersäure eignen sich insbesondere Alkalimetallnitrate, Erdalkalimetallnitrate, Lanthanoidnitrate, Aluminiumnitrat, Ammoniumnitrat sowie Mischungen davon. Entsprechende Salze der Salpetersäure sind im Handel käuflich erhältlich. Vorzugsweise werden als Salze der Salpetersäure Alkalimetallnitrate und/oder Erdalkalimetallnitrate verwendet, wie beispielsweise $Ca(NO_3)_2$ oder $NaNO_3$. Es ist auch möglich, dass als Salz (S) eine Lösung eines Salzes in Salpetersäure eingesetzt wird, wie beispielsweise eine Lösung enthaltend $Ca(NO_3)_2/HNO_3$. Zur Herstellung dieser Lösung wird $CaCO_3$ in $HNO_3$ gelöst.

Als Salze der Salpetrigen Säure eignen sich insbesondere Alkalimetallnitrite, Erdalkalimetallnitrite, Lanthanoidnitrite, Aluminiumnitrit, Ammoniumnitrit sowie Mischungen davon. Entsprechende Salze der Salpetrigen Säure sind im Handel käuflich erhältlich. Vorzugsweise werden als Salze der Salpetrigen Säure Alkalimetallnitrite und/oder Erdalkalimetallnitrite verwendet, wie beispielsweise $Ca(NO_2)_2$.

Als Salze der Halogene eignen sich insbesondere Alkalimetallhalogenide, Erdalkalimetallhalogenide, Lanthanoidhalogenide, Aluminiumhalogenide, Ammoniumhalogenide sowie Mischungen davon. Entsprechende Salze der Halogene sind im Handel käuflich erhältlich. Vorzugsweise werden die Halogene ausgewählt aus der Gruppe bestehend aus Chlorid, Bromid, Iodid sowie Mischungen davon, wobei insbesondere Iodide bevorzugt verwendet werden.

Als Salze der Trifluormethansulfonsäure eignen sich insbesondere Alkalimetalltriflate, Erdalkalimetalltriflate, Lanthanoidtriflate, Aluminiumtriflat, Ammoniumtriflat sowie Mischungen davon. Entsprechende Salze der Trifluormethansulfonsäure sind im Handel käuflich erhältlich. Vorzugsweise werden als Salze der Trifluormethansulfonsäure Alkalimetallnitrate und/oder Erdalkalimetallnitrate verwendet, wie beispielsweise $Ca(CF_3SO_3)_2$.

Prinzipiell können die Kationen des Salzes (S) organisch, anorganisch oder eine Mischung daraus sein. Vorzugsweise ist das Kation des Salzes (S) ein anorganisches Kation.

Als organische Kationen kommen beispielsweise mit organischen Resten, wie beispielsweise mit $C_1$-$C_6$-Alkylresten substituierte Ammoniumkationen, wie Tetraethylammoniumkationen, in Betracht.

Als anorganische Kationen des Salzes (S) kommen vorzugsweise Kationen in Betracht, die ausgewählt werden aus der Gruppe bestehend aus Alkalimetallen, Erdalkalimetallen, Lanthanoiden, Aluminium, Ammonium ($NH_4^+$) sowie Mischungen davon, bevorzugter aus der Gruppe bestehend aus Alkalimetallen, Erdalkalimetallen, Aluminium, Ammonium sowie Mischungen davon und noch bevorzugter aus der Gruppe bestehend aus Alkalimetallen, Erdalkalimetallen, Aluminium sowie Mischungen davon. Es ist insbesondere bevorzugt, dass das Kation des Salzes (S) ausgewählt ist aus der Gruppe bestehend aus Natrium, Calcium, Aluminium, Ammonium sowie Mischungen davon.

Somit eignen sich als Salz (S) insbesondere die folgenden Verbindungen bzw. Komponenten: $Ca(NO_3)_2$ (Calciumnitrat, üblicherweise eingesetzt als $Ca(NO_3)_2$ Tetrahydrat), eine Mischung aus $Ca(NO_3)_2/HNO_3$, $KNO_3$ (Kaliumnitrat), $NaNO_3$ (Natriumnitrat), $Mg(NO_3)_2$ (Magnesiumnitrat, üblicherweise eingesetzt als $Mg(NO_3)_2$ Hexahydrat), $Al(NO_3)_3$ (Aluminiumnitrat, üblicherweise eingesetzt als $Al(NO_3)_3$ Nonahydrat), $NH_4NO_3$ (Ammoniumnitrat), $Ca(NO_2)_2$ (Calciumnitrit), $NaCl$ (Natriumchlorid), $NaBr$ (Natriumbromid), $NaI$ (Natriumiodid), $Ca(CF_3SO_3)_2$ (Calciumtriflat), $Mg(CF_3SO_3)_2$ (Magnesiumtriflat), $Li(CF_3SO_3)_2$ (Lithiumtriflat).

Die erfindungsgemäße Härterzusammensetzung kann ein oder mehrere Salze (S) aufweisen. Die Salze können sowohl einzeln als auch im Gemisch von zwei oder mehreren der genannten Salze eingesetzt werden.

Zur Verbesserung der Löslichkeitseigenschaften des Salzes (S) in der Härterzusammensetzung kann es vorgesehen sein, dass das Salz (S) in einem geeignete Lösemittel gelöst wird und entsprechend als Lösung eingesetzt wird. Hierfür eignen sich beispielsweise organische Lösemittel wie Methanol, Ethanol und Glycerin. Als Lösemittel kann aber auch Wasser verwendet werden, gegebenenfalls auch in Mischung mit den vorgenannten organischen Lösemitteln. Zur Herstellung der entsprechenden Salzlösungen wird das Salz (S) in das Lösemittel gegeben und gerührt, vorzugsweise bis zur bis zur vollständigen Lösung.

Das Salz (S) ist vorzugsweise in einem Anteil von 0,1 bis 15 Gew.-% bezogen auf das Gesamtgewicht der Härterzusammensetzung in der Härterzusammensetzung enthalten. Vorzugsweise ist das Salz (S) in einem Anteil von 0,5 bis 12 Gew.-%, bevorzugter in einem Anteil 1,0 bis 10,0 noch bevorzugter in einem Anteil von 1,5 bis 8,0 Gew.-% bezogen auf das Gesamtgewicht der Härterzusammensetzung in der Härterzusammensetzung enthalten.

In einer weiteren Ausführungsform umfasst die Härterzusammensetzung weitere Additive aus der Gruppe der Lösemittel, phenolische Beschleuniger, Co-Beschleuniger, Haftvermittler und anorganischen Füllstoffe.

Nicht reaktive Verdünnungsmittel (Lösungsmittel) können vorzugsweise in einer Menge bis zu 30 Gew.-% enthalten sein, bezogen auf die das Gesamtgewicht der Härterzusammensetzung, beispielsweise von 1 bis 20 Gew.-%. Beispiele für geeignete Lösungsmittel sind Alkohole, wie Methanol, Ethanol oder Glycole, Niederalkylketone wie Aceton, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei ≤ 5 Gew.-% bezogen auf das Gesamtgewicht der Härterzusammensetzung.

Die phenolischen Beschleuniger sind vorzugsweise ausgewählt aus Salicylsäure, styrolysierten Phenolen und Cardanol, sowie Mischungen davon. Diese können in einem Anteil von 0 bis 10 Gew.-% in der Härterzusammensetzung vorliegen, bezogen auf das Gesamtgewicht der Härterzusammensetzung.

Als Co-Beschleuniger können beispielsweise Benzylalkohol, tertiäre Amine, Imidazole oder tertiäre Aminophenole, Organophosphine, Lewis-Basen oder -Säuren wie Phosphorsäureester, oder Gemische von zwei oder mehr davon verwendet werden. Die Co-Beschleuniger können auch in der Epoxidharzkomponente (A) vorliegen, soweit sie mit den Epoxidharzen verträglich sind.

Bevorzugt sind die Co-Beschleuniger in der Härterzusammensetzung in einem Gewichtsanteil von 0,001 bis 5 Gew.-% enthalten, bezogen auf das Gesamtgewicht der Härterzusammensetzung.

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (Evonik, Deutschland).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben, deren Inhalt hiermit in die vorliegende Anmeldung mit aufgenommen wird.

Der Haftvermittler kann in einer Menge bis zu 10 Gew.-%, bevorzugt 0,1 bis 5 Gew.-%, weiter bevorzugt 1,0 bis 2,5 Gew.-% bezogen auf das Gesamtgewicht der Härterzusammensetzung enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweils käuflich unter der Produktserie Silbond der Firma Quarzwerke erhältlich. Hierbei sind die Produktserien Silbond EST (Epoxysilanmodifiziert) und Silbond AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, ($d_{50}$ = 0,3 $\mu$m) oder Qualitäten wie DAW oder DAM mit den Typenbezeichnungen 45 ($d_{50}$ < 0,44 $\mu$m), 07 ($d_{50}$ > 8,4$\mu$m), 05 ($d_{50}$ < 5,5 $\mu$m), 03 ($d_{50}$ < 4,1$\mu$m). Weiterhin können die oberflächenbehandelte Fein- und Feinstfüllstoffe vom Typ Aktisil AM (aminosilanbehandelt, $d_{50}$ = 2,2 $\mu$m) und Aktisil EM (epoxysilanbehandelt, d50=2,2 $\mu$m) von Hoffman Mineral verwendet werden.

Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten des später beschriebenen Mehrkomponenten-Epoxidharzsystems vorhanden sein. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Härterzusammensetzung.

Gegenstand der vorliegenden Erfindung ist ferner eine Epoxidharzmasse, die mindestens ein härtbares Epoxidharz und eine Härterzusammensetzung wie zuvor beschrieben umfasst. Bevorzugt handelt es sich bei der Epoxidharzmasse um eine Mehrkomponenten-Epoxidharzmasse, bevorzugt um eine Zweikomponenten-Epoxidharzmasse.

Als härtbares Epoxidharz kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 150 bis 300 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von $M_n \leq 2000$ g/mol.

Ein weiterer Gegenstand der vorliegenden Erfindung ist ein Mehrkomponenten-Epoxidharzsystem umfassend eine Epoxidharzkomponente (A) und eine Härterkomponente, wobei die Epoxidharzkomponente (A) ein härtbares Epoxidharz enthält, und die Härterkomponente 3-Aminomethyl-3,5,5-trimethylcyclohexan und mindestens ein weiteres gegenüber Epoxidgruppen reaktives cycloaliphatisches Amin enthält, wobei 3-Aminomethyl-3,5,5-trimethylcyclohexan in einem Anteil von mindestens 10 Gew.-% bezogen auf das Gesamtgewicht aller gegenüber Epoxidgruppen reaktiven Aminen enthalten ist und wobei mindestens ein Salz (S) ausgewählt aus Salzen der Salpetersäure, Salzen der Salpetrigen Säure, Salzen der Halogene, Salzen der Trifluormethansulfonsäure und Kombinationen davon in der Epoxidharzkomponente (A) und/oder in der Härterkomponente enthalten ist. Bevorzugt ist das Mehrkomponenten-Epoxidharzsystem ein Zweikomponenten-Epoxidharzsystem.

Für das härtbare Epoxidharz, das weitere gegenüber Epoxidgruppen reaktive cycloaliphatische Amin und das Salz (S) des Mehrkomponenten-Epoxidharzsystems gelten die vorstehenden Ausführungen.

Das als Beschleuniger eingesetzte Salz (S) kann in der Epoxidharzkomponente (A) oder in der Härterkomponente oder sowohl in der Epoxidharzkomponente (A) als auch in der Härterkomponente enthalten sein. Es is bevorzugt, dass das Salz (S) mindestens in der Härterkomponente, bevorzugt nur in der Härterkomponente, enthalten ist. In diesem Fall kommt im Mehrkomponenten-Epoxidharzsystem die zuvor beschriebene Härterzusammensetzung zum Einsatz.

Der Anteil an Epoxidharz an der Epoxidharzkomponente (A) beträgt >0 bis 100 Gew.-%, bevorzugt 10 bis 70 Gew.-% und besonders bevorzugt 30 bis 60 Gew.-%, bezogen auf das Gesamtgewicht der Epoxidharzkomponente (A).

Die Epoxidharzkomponente (A) kann wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropan-triglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Die Reaktivverdünner liegen bevorzugt in einer Menge von 0 bis 60 Gew.-% vor, insbesondere von 1 bis 20 Gew.-%, bezogen auf das Gesamtgewicht der Epoxidharzkomponente (A).

Der Anteil der Epoxidharzkomponente (A) an der Gesamtmasse des Mehrkomponenten-Epoxidharzsystems beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche Zusätze enthalten, insbesondere Haftvermittler und Füllstoffe, wie bereits für die Härterzusammensetzung beschrieben.

Der Haftvermittler kann in einer Menge bis zu 10 Gew.-%, bevorzugt 0,1 bis 5 Gew.-%, besonders bevorzugt 1,0 bis 5,0 Gew.-%, bezogen auf das Gesamtgewicht der Epoxidharzkomponente (A), enthalten sein.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Epoxidharzkomponente (A) sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Das Mehrkomponenten-Epoxidharzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die Härterkomponente, bevorzugt die Härterzusammensetzung (B), reaktionsinhibierend voneinander getrennt angeordnet sind.

Zur bestimmungsgemäßen Anwendung des Mehrkomponenten-Epoxidharzsystems werden die Epoxidharzkomponente (A) und die Härterkomponente aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente reagieren mit den Epoxidharzen der Harzkomponente (A) unter Polyaddition, sodass die Epoxidharzmasse unter Umgebungsbedingungen innerhalb einer gewünschten Zeit, vorzugsweise innerhalb weniger Minuten oder Stunden, aushärtet.

Die Komponenten A und B werden bevorzugt in einem Verhältnis gemischt, das entsprechend der EEW- und AHEW-Werte eine ausgeglichene Stöchiometrie ergibt.

Der AHEW-Wert *(amine hydrogen equivalent weight,* H-Äquivalent) gibt die Menge der Härterzusammensetzung an, die 1 mol reaktives H enthält Die Bestimmung des AHEW erfolgt in für den Fachmann bekannter Weise anhand der Formulierung der Reaktionsmischung aus den bekannten H-Äquivalenten der verwendeten Edukte und Rohstoffe, aus denen sie errechnet werden.

Am Beispiel von meta-Xylylendiamin (Mw = 136 g/mol, Funktionalität = 4 eq/mol) ist die Errechnung des AHEW nachfolgend exemplarisch erläutert:

$$\text{Allgemeine Formel: } AHEW = \frac{M_W}{Funktionalit\ddot{a}t} = \frac{136}{4}\left[\frac{g}{eq}\right] = 34\left[\frac{g}{eq}\right]$$

Die EEW *(epoxide equivalent weight,* Epoxidäquivalentwerte) werden in der Regel von den Herstellern der jeweils verwendeten Epoxidharzkomponenten angegeben oder sie werden nach bekannten Methoden berechnet. Die EEW geben die Menge in g Epoxidharz an, die 1 Mol Epoxidgruppen enthält.

Experimentell wurde die AHEW durch Bestimmung der Glasübergangstemperatur (Tg) einer Mischung aus Epoxidharz (mit bekanntem EEW) und Aminkomponente erhalten. Es wurden dabei die Glasübergangstemperaturen von Epoxidharz/Amin-Mischungen mit unterschiedlichen Verhältnissen bestimmt. Die Probe wurde mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("$T_g2$") besitzt das optimale Verhältnis von Epoxidharz und Amin. Aus dem bekannten EEW und dem optimalen Epoxidharz/Amin-Verhältnis lässt sich der AHEW-Wert berechnen. Beispiel: EEW = 158 g/mol

Mischung Amin/Epoxidharz mit maximaler $T_g2$: 1 g Amin mit 4,65 g Epoxidharz

$$AHEW = \frac{1}{4,65} \cdot 158 = 34\left[\frac{g}{eq}\right]$$

Die erfindungsgemäße Epoxidharzmasse bzw. das erfindungsgemäße Mehrkomponenten-Epoxidharzsystem wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Epoxidharzmassen und die erfindungsgemäßen Mehrkomponenten-Epoxidharzsysteme zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Epoxidharzmasse oder ein erfindungsgemäßes Mehrkomponenten-Epoxidharzsystem, wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist die Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse zur chemischen Befestigung von Konstruktionselementen, insbesondere zur Verankerung von Befestigungselementen in Bohrlöchern. Die Epoxidharzmasse umfasst dabei 3-Aminomethyl-3,5,5-trimethylcyclohexan, bevorzugt in einem Anteil von mindestens 10 Gew.-% bezogen auf das Gesamtgewicht aller gegenüber Epoxidgruppen reaktiven Aminen, und mindestens ein weiteres gegenüber Epoxidgruppen reaktives cycloaliphatisches Amin. Es ist bevorzugt, dass die Epoxidharzmasse in Form eines Mehrkomponenten-Epoxidharzsystems vorliegt, welche die zuvor beschriebenen Epoxidharzkomponente (A) und die Härterkomponente umfasst. Es ist weiterhin bevorzugt, dass das Salz (S) in der Härterkomponente enthalten ist und somit eine Härterzusammensetzung (B) wie zuvor beschrieben verwendet wird.

Die Verwendung mindestens eines Salzes (S) im Sinne der vorliegenden Erfindung als Beschleuniger in einer Epoxidharzmasse, insbesondere in einem Mehrkomponenten-Epoxidharzsystem, ermöglicht es, die Aushärtezeit der Epoxidharzmasse erheblich zu verkürzen und ferner eine ausreichende Auszugsfestigkeit bereits nach vier bis sechs Stunden zu gewährleisten. Ferner weisen die gehärteten Epoxidharzmasse eine hervorragende Auszugsfestigkeit bei erhöhten Temperaturen und im wassergefüllten Bohrloch auf.

Die vorliegende Erfindung betrifft auch die Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse, insbesondere in einem Mehrkomponenten-Epoxidharzsystem. Die Epoxidharzmasse umfasst dabei 3-Aminomethyl-3,5,5-trimethylcyclohexan, bevorzugt in einem Anteil von mindestens 10 Gew.-% bezogen auf das Gesamtgewicht aller gegenüber Epoxidgruppen reaktiven Aminen, und mindestens ein weiteres gegenüber Epoxidgruppen reaktives cycloaliphatisches Amin. Es ist bevorzugt, dass die Epoxidharzmasse in Form eines Mehrkomponenten-Epoxidharzsystems vorliegt, welche die zuvor beschriebenen Epoxidharzkomponente (A) und Härterkomponente umfasst. Es ist weiterhin bevorzugt, dass das Salz (S) in der Härterkomponente enthalten ist und somit eine Härterzusammensetzung (B) verwendet wird.

Die Verwendung mindestens eines Salzes (S) im Sinne der vorliegenden Erfindung als Beschleuniger in einer Epoxidharzmasse, insbesondere in einer Mehrkomponenten-Epoxidharzmasse und weiterhin bevorzugt in der Härterkomponente der Mehrkomponenten-Epoxidharzmasse, ermöglicht insbesondere eine Erhöhung der Auszugsfestigkeit der Epoxidharzmasse bei erhöhten Temperaturen, wie beispielsweise in einem Temperaturbereich von 40 °C bis 120 °C.

Ferner ermöglicht die Verwendung mindestens eines Salzes (S) im Sinne der vorliegenden Erfindung als Beschleuniger in einer Epoxidharzmasse, insbesondere in einer Mehrkomponenten-Epoxidharzmasse und weiterhin bevorzugt in der Härterkomponente der Mehrkomponenten-Epoxidharzmasse, eine Erhöhung der Auszugsfestigkeit der Epoxidharzmassen in wassergefüllten Bohrlöchern.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## AUSFÜHRUNGSBEISPIELE

## Epoxidharzkomponente (A)

### Ausgangsmaterialien

Als Epoxidharze wurden in den Beispielen die im Handel unter den Bezeichnungen Araldite GY 240 und Araldite GY 282 (Huntsman) erhältlichen Bisphenol A-basierten beziehungsweise Bisphenol F-basierten Epoxidharze verwendet.

Als Reaktivverdünner wurden die im Handel unter den Bezeichnungen Araldite DY-206 und AralditeTM DY-T (Huntsman) erhältlichen 1,4-Butandiol-diglycidylether und Trimethyolpropan-triglycidylether verwendet.

Als Haftvermittler wurde 3-Glycidyloxypropyl-trimethoxysysilan erhältlich unter der Bezeichnung Dynalsylan GLYMO™ (Evonik Industries) verwendet.

Die flüssigen Komponenten wurden per Hand vorgemischt. Anschließend wurden als Füllstoff Quarz (Millisil™ W12 der Firma Quarzwerke Frechen) und als Verdicker pyrogene Kieselsäure (Cab-O-Sil™ TS- 720 der Firma Cabot Rheinfelden) zugegeben und die Mischung im Dissolver (PC Laborsystem, Volumen 1L) 10 min lang bei einem Unterdruck von 80 mbar bei 3500 U/min gerührt.

Die Zusammensetzung der in den Beispielen verwendeten Epoxidharzkomponenten A1 bis A17 ist in der nachfolgenden Tabelle 1 angegeben.

Tabelle 1: Zusammensetzung der Epoxidharzkomponenten A1 bis A17 in Gew.-%

| | Bisphenol A-basiertes Epoxidharz | Bisphenol F-basiertes Epoxidharz | 1,4-Butanedioldiglycidyl ether | Trimethylol propantriglycidyl ether | 3-Glycidyloxypropyltrimethoxysilan | Quarz | Kieselsäure | EEW [g/Eq] |
|---|---|---|---|---|---|---|---|---|
| A1 | 25,2 | 13,6 | 4,9 | 4,9 | 2,8 | 45,9 | 2,7 | 314 |
| A2 | 25,0 | 13,4 | 4,8 | 4,8 | 2,8 | 46,5 | 2,7 | 317 |
| A3 | 26,0 | 14,0 | 5,0 | 5,0 | 2,8 | 44,5 | 2,7 | 305 |
| A4 | 27,0 | 14,6 | 5,2 | 5,2 | 2,8 | 42,5 | 2,7 | 293 |
| A5 | 29,2 | 15,7 | 5,6 | 5,6 | 3,4 | 37,8 | 2,7 | 271 |
| A6 | 30,4 | 16,4 | 5,9 | 5,9 | 3,4 | 35,3 | 2,7 | 260 |
| A7 | 27,0 | 14,6 | 5,2 | 5,2 | 2,8 | 42,5 | 2,7 | 293 |
| A8 | 28,1 | 15,1 | 5,4 | 5,4 | 2,8 | 40,5 | 2,7 | 282 |
| A9 | 28,9 | 15,6 | 5,6 | 5,6 | 2,8 | 38,8 | 2,7 | 275 |
| A10 | 29,6 | 16,0 | 5,7 | 5,7 | 2,8 | 37,5 | 2,7 | 268 |
| A11 | 31,2 | 16,8 | 6,0 | 6,0 | 3,4 | 33,9 | 2,7 | 254 |
| A12 | 31,2 | 16,8 | 6,0 | 6,0 | 2,8 | 34,5 | 2,7 | 255 |
| A13 | 28,2 | 15,2 | 5,4 | 5,4 | 2,8 | 40,3 | 2,7 | 282 |
| A14 | 26,3 | 14,1 | 5,1 | 5,1 | 2,8 | 43,9 | 2,7 | 302 |
| A15 | 32,0 | 17,2 | 6,2 | 6,2 | 2,8 | 32,9 | 2,7 | 249 |
| A16 | 24,9 | 13,4 | 4,8 | 4,8 | 2,8 | 46,6 | 2,7 | 318 |
| A17 | 31,3 | 16,9 | 6,0 | 6,0 | 2,8 | 34,3 | 2,7 | 255 |

Die Zusammensetzung der in den Vergleichsbeispielen verwendeten Epoxidharzkomponenten VA1 bis VA7 ist in der nachfolgenden Tabelle 2 angegeben.

Tabelle 2: Zusammensetzung der Epoxidharzkomponenten VA1 bis VA7 in Gew.-%

| | Bisphenol A-basiertes Epoxidharz | Bisphenol F-basiertes Epoxidharz | 1,4-Butanedioldiglycidyl ether | Trimethylol propantriglycidyl ether | 3-Glycidyloxypropyltrimethoxy silan | Quarz | Kieselsäure | EEW [g/Eq] |
|---|---|---|---|---|---|---|---|---|
| VA1 | 28,3 | 15,3 | 5,5 | 5,5 | 2,8 | 39,9 | 2,7 | 280 |
| VA2 | 26,5 | 14,3 | 5,1 | 5,1 | 2,8 | 43,5 | 2,7 | 299 |
| VA3 | 32,8 | 17,6 | 6,3 | 6,3 | 2,8 | 31,5 | 2,7 | 244 |
| VA4 | 31,5 | 16,9 | 6,1 | 6,1 | 2,8 | 33,9 | 2,7 | 253 |
| VA5 | 31,2 | 16,8 | 6,0 | 6,0 | 3,4 | 33,9 | 2,7 | 254 |
| VA6 | 31,3 | 16,9 | 6,0 | 6,0 | 2,8 | 34,3 | 2,7 | 255 |
| VA7 | 31,3 | 16,9 | 6,0 | 6,0 | 2,8 | 34,3 | 2,7 | 254 |

**Härterzusammensetzung (B)**

Ausgangsmaterialien

Als Amine wurden 3-Aminomethyl-3,5,5-trimethylcyclohexan (Isophorondiamin,IPDA) der Firma Evonik Degussa, Deutschland, 1,3-Cyclohexandimethanamin (1,3-BAC) und m-Xylylendiamin (mXDA) der Firma MGC, Japan, 1,2-Diaminocyclohexan (Dytek DCH-99) der Firma Invista, 2-Piperazino-ethylamin (N-AEP) und 4,4'-Methylenbis(cyclohexylamin) (PACM) der Firma Sigma Aldrich Deutschland, Methylcyclohexandiamin (Baxxodur EC 210) der Firma BASF SE, Deutschland, Bicyclo[2.2.1]heptanebis(methyl-amine) (PRO-NBDA) der Firma Mitsui Chemicals, Japan sowie 2-Methylpentamethylendiamin (Dytek A) der Firma Invista, Niederlande, zur Herstellung der Härterzusammensetzung (B) verwendet.

Als Haftvermittler wurde 3-Aminopropyl-triethoxysilan verwendet, welches unter dem Handelsnamen Dynasylan AMEO der Firma Evonik Degussa erhältlich ist.

Als Füllstoff wurde Quarz (Millisil™ W12 der Firma Quarzwerke Frechen) sowie Calciumaluminatzement (Secar 80 der Firma Kerneos SA) und als Verdicker pyrogene Kieselsäure (Cab-O-Sil™ TS-720 der Firma Cabot Rheinfelden) verwendet.

Zur Herstellung der in der Härterzusammensetzung B verwendeten Salze (S) wurden die in der nachfolgenden Tabelle 3 angegebenen Bestandteile verwendet.

Tabelle 3: Liste der verwendeten Salze und Beschleunigerbestandteile (Beispiele und Vergleichsbeispiele)

| Salz (S) bzw. Beschleuniger | Handelsname | Hersteller |
| --- | --- | --- |
| Calciumnitrat | Calciumnitrat-Tetrahydrat | Sigma-Aldrich |
| Calciumcarbonat | Calciumcarbonat | Sigma-Aldrich |
| Salpetersäure 70%ig | Salpetersäure | Sigma-Aldrich |
| Calciumtriflat | Calciumtrifluoromethansulfonat | Sigma-Aldrich |
| 2,4,6-Tris(dimethylaminomethyl)phenol, Bis[(dimethylamino)methyl]phenol | Ancamine K54 | Evonik |
| Styrolisiertes Phenol | Novares LS 500 | Rütgers Novares GmbH |
| Phenol Novolak | Supraplast 3616 | Süd-West Chemie |

Das Salz Calciumnitrat wurden als Lösung in Glycerin (1,2,3-Propantriol, CAS-Nr. 56-81-5, Merck, D) eingesetzt. Dazu wurden 400,0 g Calciumnitrat-Tetrahydrat zu 100 g Glycerin gegeben und bei 50 °C bis zur vollständigen Lösung (ca. 3 Stunden) gerührt. Die so hergestellte Lösung enthielt 80,0 % Calciumnitrat-Tetrahydrat.

Calciumtriflat wurde als Feststoff im Amin des jeweiligen Härters gelöst.

Weiterhin wurde ein Calciumnitrat/Salpetersäure-Lösung (Calciumnitrat/Salpetersäure) als Beschleuniger eingesetzt. Zur Herstellung dieser Lösung wurden 52,6 g Calciumcarbonat langsam zu 135,2 g Salpetersäure gegeben und anschließend 5 min gerührt.

Zur Herstellung der Härterzusammensetzungn (B) wurden die flüssigen Komponenten gemischt. Das Salz wurde hinzugegeben und anschließend wurden Quarzmehl und Kieselsäure zugegeben und im Dissolver (PC Laborsystem, Volumen 1L) bei einem Unterdruck von 80 mbar bei 2500 U/min für 10 min gerührt.

Die Zusammensetzung der so hergestellten Härterzusammensetzung (B) ist in den nachfolgenden Tabellen 4 bis 8 (erfindungsgemäß) und in Tabelle 9 (Vergleichsbeispiele) angegeben.

In den Härterzusammensetzungn B2 bis B10 (Tabelle 4) wurde als Härter eine Kombination von IPDA und 1,3-BAC eingesetzt und mit unterschiedlichen Salzen (S) kombiniert.

**Tabelle 4**: Zusammensetzung der Härterzusammensetzungn B1 bis B10 in Gew.-%;

| | IPDA | 1,3-BAC | Calcium nitrat | Calciumni trat/ Salpeters äure | Calciumtriflat | Haftver mittler | Quarz | Füllstoff | Verdicker | AHEW [g/Eq] |
|---|---|---|---|---|---|---|---|---|---|---|
| **B1** | 44,7 | - | 7,5 | - | - | 1,5 | 20,5 | 20,8 | 5,0 | **94** |
| **B2** | 18,4 | 18,3 | 7,5 | - | - | 1,5 | 23,5 | 25,8 | 5,0 | **104** |
| **B3** | 19,0 | 19,0 | 6,25 | - | - | 1,5 | 23,5 | 25,75 | 5,0 | **101** |
| **B4** | 19,6 | 19,6 | 5,0 | - | - | 1,5 | 23,5 | 25,8 | 5,0 | **98** |
| **B5** | 21,0 | 21,0 | 3,75 | - | - | - | 23,5 | 25,75 | 5,0 | **92** |
| **B6** | 21,7 | 21,6 | 2,5 | - | - | - | 23,5 | 25,7 | 5,0 | **90** |
| **B7** | 20,1 | 20,1 | - | 4,0 | - | 1,5 | 23,5 | 25,8 | 5,0 | **95** |
| **B8** | 20,6 | 20,6 | - | 3,0 | - | 1,5 | 23,5 | 25,8 | 5,0 | **93** |
| **B9** | 20,6 | 20,6 | - | - | 3,0 | 1,5 | 23,5 | 25,8 | 5,0 | **93** |
| **B10** | 21,1 | 21,1 | - | - | 2,0 | 1,5 | 23,5 | 25,8 | 5,0 | **91** |

In den Härterzusammensetzungn B11 bis B15 wurde als Salz (S) Calciumnitrat eingesetzt und das Verhätnis von IPDA zu 1,3-BAC variert.

Tabelle 5: Zusammensetzung der Härterzusammensetzungn B11 bis B15 [Gew.-%]: Variation des Verhältnisses von IPDA und 1,3-BAC

|        | IPDA | 1,3-BAC | Calciumnitrat | Quarz | Füllstoff | Verdicker | **AHEW [g/Eq]** |
|--------|------|---------|---------------|-------|-----------|-----------|-----------------|
| **B11** | 42,0 | -       | 3,7           | 23,5  | 25,8      | 5,0       | 101             |
| **B12** | 33,6 | 8,4     | 3,7           | 23,5  | 25,8      | 5,0       | 98              |
| **B13** | 25,2 | 16,8    | 3,7           | 23,5  | 25,8      | 5,0       | 94              |
| **B14** | 16,8 | 25,2    | 3,7           | 23,5  | 25,8      | 5,0       | 91              |
| **B15** | 8,4  | 33,6    | 3,7           | 23,5  | 25,8      | 5,0       | 88              |

In den Härterzusammensetzungn B16 bis B20 wurde IPDA mit unterschiedlichen cycloaliphatischen Aminen kombiniert.

Tabelle 6: Zusammensetzung der Härterzusammensetzungn B11 bis B20 [Gew.-%]

|  | IPDA | 1,3-BAC | Baxxodur EC210 | PRO-NBDA | Dytek DCH-99 | Calcium nitrat | Ancamin K54 | Haft vermi ttler | Quarz | Füllstoff | Verdicker | **AHEW [g/Eq]** |
|---|---|---|---|---|---|---|---|---|---|---|---|---|
| **B16** | 27,9 | 27,8 | - | - | - | 7,50 | - | 1,5 | 18,0 | 13,0 | 4,3 | **69** |
| **B17** | 25,4 | 25,3 | - | - | - | 7,50 | 5,0 | 1,5 | 18,0 | 13,0 | 4,3 | **76** |
| **B18** | 19,0 | - | 19,0 | - | - | 8,8 | - | 1,5 | 22,5 | 24,2 | 5,0 | **95** |
| **B19** | 20,0 | - | - | 20,0 | - | 6,25 | - | 1,5 | 22,5 | 24,75 | 5,0 | **100** |
| **B20** | 19,3 | - | - | - | 19,2 | 11,25 | - | 1,5 | 21,5 | 22,25 | 5,0 | **88** |

In den Härterzusammensetzungn B21 bis B24 wurde als Salz (S) Calciumnitrat eingesetzt und das Verhätnis von IPDA zu PACM variert.

**Tabelle** 7: Zusammensetzung der Härterzusammensetzungn B21 bis B24 [Gew.-%]: Variation des IPDA/PACM Verhältnisses

|     | IPDA | PACM | Calciumnitrat | Quarz | Füllstoff | Verdicker | **AHEW [g/Eq]** |
|-----|------|------|---------------|-------|-----------|-----------|-----------------|
| **B21** | 46,6 | 11,6 | 5,0 | 19,5 | 13,0 | 4,3 | 76 |
| **B22** | 34,9 | 23,3 | 5,0 | 19,5 | 13,0 | 4,3 | 79 |
| **B23** | 23,3 | 34,9 | 5,0 | 19,5 | 13,0 | 4,3 | 83 |
| **B24** | 11,6 | 46,6 | 5,0 | 19,5 | 13,0 | 4,3 | 86 |

**Tabelle** 8: Zusammensetzung der Härterzusammensetzungn B25 und B26 [Gew.-%]

|     | IPDA | PACM | Calciumn itrat | Calcium nitrat/ Salpeter säure-Lsg | Haftver mittler | Quarz | Füllstoff | Verdicker | **AHEW [g/Eq]** |
|-----|------|------|----------------|-------------------------------------|-----------------|-------|-----------|-----------|-----------------|
| B25 | 26,9 | 26,0 | 8,8 | - | 1,5 | 19,0 | 13,5 | 4,3 | **88** |
| B26 | 42,0 | - | - | 3,0 | - | 25,0 | 25,0 | 5,0 | **101** |

Die Zusammensetzung der in den Vergleichsbeispielen verwendeten Härterzusammensetzungn VB1 bis VB10 ist in der nachfolgenden Tabelle 9 angegeben.

Tabelle 9: Zusammensetzung der Härterzusammensetzungn VB1 bis VB10 [Gew.-%]

| | IPDA | mXDA | N-AEP | Dytek A | 1,3-BAC | Calcium nitrat | Ancamin 54 | Styrolisiertes Phenol | Novolak | Haft vermi ttler | Quarz | Füllstoff | Verdicker | AHEW [g/Eq] |
|---|---|---|---|---|---|---|---|---|---|---|---|---|---|---|
| VB1 | 19,0 | 19,0 | - | - | - | 6,25 | - | - | - | 1,5 | 23,5 | 25,75 | 5,0 | 98 |
| VB2 | 22,3 | - | 22,2 | - | - | 3,75 | - | - | - | 1,5 | 21,5 | 23,75 | 5,0 | 95 |
| VB3 | 20,3 | - | - | 20,2 | - | 3,75 | - | - | - | 1,5 | 23,5 | 25,75 | 5,0 | 84 |
| VB4 | 22,1 | 22,1 | - | - | - | - | - | - | - | 1,5 | 23,5 | 25,8 | 5,0 | 87 |
| VB5 | - | - | - | - | 42,0 | 3,7 | - | - | - | - | 23,5 | 25,8 | 5,0 | 85 |
| VB6 | - | 41,2 | - | - | - | 3,8 | - | - | - | - | 25,0 | 25,0 | 5,0 | 83 |
| VB7 | 41,8 | - | - | - | - | - | 2,4 | - | - | 1,5 | 29,7 | 20,3 | 4,3 | 68 |
| VB8 | 34,2 | - | - | - | - | - | 2,4 | 7,6 | - | 1,5 | 29,7 | 20,3 | 4,3 | 83 |
| VB9 | 34,2 | - | - | - | - | - | 2,4 | 7,6 | 3,0 | 1,5 | 26,7 | 20,3 | 4,3 | 83 |
| VB10 | 31,8 | - | - | - | - | - | 2,4 | - | 10,0 | 1,5 | 29,7 | 20,3 | 4,3 | 89 |

**Mörtelmassen und Auszugsversuche**

Die Epoxidharzkomponente (A) und die Härterzusammensetzung (B) wurden jeweils aus einer 3:1-Hartkatusche eingesetzt. Dazu wurden die Die Epoxidharzkomponente (A) und die Härterzusammensetzung (B) in eine 3:1-Hartkartusche gefüllt nach Mischung in einem statischen Quadromischer (18 Mischebenen, Länge des Mischelements: 11,5 cm, Hersteller Sulzer AG, Schweiz) in das Bohrloch appliziert.

Bei den Beispielen 11-15, 16, 17, 21-24 und 26 sowie in den Vergleichsbeispielen 5 bis 10 wurde die Epoxidharzkomponente (A) und die Härterzusammensetzung (B) in einem Speedmixer in einem Verhältnis gemischt, das entsprechend der EEW- und AHEW-Werte eine ausgeglichene Stöchiometrie ergab. Das Gemisch wurde möglichst blasenfrei in eine 1K-Kartusche gefüllt und sofort in das für die Auszugsversuche präparierte Bohrloch injiziert.

Die Auszugsfestigkeit der durch Mischen der Epoxidharzkomponente (A) und Härterzusammensetzung (B) gemäß den unten angegebenen Beispielen erhaltenen Mörtelmassen wurden unter Verwendung einer hochfesten Ankergewindestange M12 gemäß ETAG 001 Part 5 bestimmt, die in ein hammergebohrtes Bohrloch mit einem Durchmesser von 14 mm und einer Bohrlochtiefe von 69 mm mit der jeweiligen Mörtelmasse in C20/25 Beton eingedübelt wurde. Die Bohrlöcher wurden gereinigt, wobei sich die Anzahl und Art der jeweiligen Reinigungsschritte nach der Art des Auszugsversuchs richtete.

Die Bohrlöcher wurden hierfür vom Bohrgrund her mit der jeweils zu prüfenden Mörtelmasse zu zwei Dritteln befüllt (A1, A22 und A21, 80°C) bzw. vollständig befüllt (F1c). Die Gewindestange wurde von Hand eingedrückt. Der Mörtelüberschuss wurde mittels eines Spachtels entfernt.

Es wurden die folgenden Arten von Auszugsversuchen durchgeführt.

| **A1:** | Trockener Beton; |
| | Hammergebohrt; |
| Reinigung: | zweimal Ausblasen mit Druckluft (6 bar), zweimal Bürsten und anschließend nochmals zweimal Ausblasen mit Druckluft (6 bar); |
| Einbindetiefe: | 68 mm; |
| | Aushärtung 24 Stunden bei 25 °C; |
| **A22**: | Trockener Beton; |
| | Hammergebohrt; |
| Reinigung: | zweimal Ausblasen mit Druckluft (6 bar), zweimal Bürsten und anschließend nochmals zweimal Ausblasen mit Druckluft (6 bar); |
| Einbindetiefe: | 68 mm; |
| | Aushärtung 6 Stunden bei 25 °C; |
| **A21, 80 °C:** | Trockener Beton; |
| | Hammergebohrt; |
| Reinigung: | zweimal Ausblasen mit Druckluft (6 bar), zweimal Bürsten und anschließend nochmals zweimal Ausblasen mit Druckluft (6 bar); |
| Einbindetiefe: | 68 mm; |
| | Aushärtung 6 Stunden bei 25 °C; |
| **F1c:** | Wassergesättigter Beton; |
| | Hammergebohrt; |
| Reinigung: | einmal Ausblasen mit Druckluft (6 bar), einmal Bürsten und anschließend nochmals einmal Ausblasen mit Druckluft (6 bar); |
| Injektion: | Mischerverlängerung mit Stauzapfen in das wassergefüllte Bohrloch; |
| Einbindetiefe | 68 mm |
| Aushärtung | 48 Stunden bei 25 °C. |

Die Versagenslast wurde durch zentrisches Ausziehen der Ankergewindestange mit enger Abstützung ermittelt. Die mit den Mörtelmassen unter Verwendung einer Härterzusammensetzung (B) gemäß den Beispielen 1 bis 26 und den Vergleichsbeispielen 1 bis 10 erhaltenen Lastwerte sind den nachfolgenden Tabellen 10 und 11 zu entnehmen.

Um eine Bewertung der Mörtelmassen unter schwierigen Bedingungen wie Versagenslast bei erhöhter Temperatur und nach Applikation im wassergefüllten Bohrloch vornehmen zu können, wird im Allgemeinen der Quotient aus Versagenslast unter schwierigen Bedingungen (A21, F1c) und Versagenslast im Referenzbohrloch (trockenes, gereinigtes Bohrloch, bei Raumtemperatur) gebildet. Das Ergebnis ist der prozentuale Anteil der Referenzlast, der unter schwierigen Bedingungen bleibt. Die entsprechenden Ergebnisse sind in der nachfolgenden Tabelle dargestellt.

Tabelle 10: Versagenslasten der erfindungsgemäßen Mörtelmassen gemäß den Beispielen 1 bis 26

|  |  |  | Auszugsversuche Lastwerte [N/mm$^2$] | | | | Verhältnis | |
|---|---|---|---|---|---|---|---|---|
|  | (A) | (B) | A1 | A22 | A21 80°C | F1c | A21:A1 | F1c:A1 |
| Beispiel 1 | 1 | 1 | 31,7 | 17,5 | 18,6 | 27,5 | 0,59 | 0,87 |
| Beispiel 2 | 2 | 2 | 32,3 | 28,2 | 26,6 | 19 | 0,82 | 0,59 |
| Beispiel 3 | 3 | 3 | 34,3 | 27,9 | 26,9 | 20,5 | 0,78 | 0,60 |
| Beispiel 4 | 4 | 4 | 31,1 | 22,7 | 26 | 20,7 | 0,84 | 0,67 |
| Beispiel 5 | 5 | 5 | 31,3 | 26,2 | 24,5 | 21,2 | 0,78 | 0,68 |
| Beispiel 6 | 6 | 6 | 32,1 | 24,6 | 25,7 | 25,8 | 0,80 | 0,80 |
| Beispiel 7 | 7 | 7 | 33,1 | 23,3 | 22 | 23,8 | 0,66 | 0,72 |
| Beispiel 8 | 8 | 8 | 34,1 | 27,6 | 24,3 | 22,7 | 0,71 | 0,67 |
| Beispiel 9 | 9 | 9 | 31,5 | 19,8 | 26,6 | 25,5 | 0,84 | 0,81 |
| Beispiel 10 | 10 | 10 | 34 | 23,3 | 27,6 | 26,6 | 0,81 | 0,78 |
| Beispiel 11 | 11 | 11 | 34,9 | 21,9 | 28,6 | 19,3 | 0,82 | 0,55 |
| Beispiel 12 | 11 | 12 | 37,2 | 28 | 28,8 | 20,6 | 0,77 | 0,55 |
| Beispiel 13 | 11 | 13 | 37,8 | 31,6 | 27,9 | 19,5 | 0,74 | 0,52 |
| Beispiel 14 | 11 | 14 | 36,8 | 34,5 | 28,8 | 19,6 | 0,78 | 0,53 |
| Beispiel 15 | 11 | 15 | 37,6 | 35,9 | 26,6 | 18,9 | 0,71 | 0,50 |
| Beispiel 16 | 12 | 16 | 33,2 | 30,2 | - | - |  | - |
| Beispiel 17 | 12 | 17 | 34,3 | 29,5 | - | - | - | - |
| Beispiel 18 | 13 | 18 | 33,7 | 25,4 | 29,2 | 19,2 | 0,87 | 0,57 |
| Beispiel 19 | 14 | 19 | 30,4 | 22,2 | 24,6 | 23,6 | 0,81 | 0,78 |
| Beispiel 20 | 15 | 20 | 31,2 | 14,6 | 23,7 | 26,5 | 0,76 | 0,85 |
| Beispiel 21 | 11 | 21 | 34,3 | 21,2 | 25,2 | 30,2 | 0,73 | 0,88 |
| Beispiel 22 | 11 | 22 | 30,3 | 21,9 | 29 | 29,8 | 0,96 | 0,98 |
| Beispiel 23 | 11 | 23 | 31,9 | 21,2 | 24,8 | 29,1 | 0,78 | 0,91 |
| Beispiel 24 | 11 | 24 | 34,3 | 26,5 | 21,6 | 27,5 | 0,63 | 0,80 |
| Beispiel 25 | 16 | 25 | 32,4 | 21,8 | 28,3 | 19,5 | 0,87 | 0,60 |
| Beispiel 26 | 17 | 26 | 35,5 |  | 31,3 | 25,9 | 0,88 | 0,73 |

Tabelle 11: Versagenslasten der Mörtelmassen gemäß der Vergleichsbeispiele 1 bis 10

|  |  |  | Auszugsversuche Lastwerte [N/mm$^2$] | | | | Verhältnis | |
|---|---|---|---|---|---|---|---|---|
|  | VA | VB | A1 | A22 | A21 80°C | F1c | A21:A1 | F1c:A1 |
| Vergleichsbeispiel 1 | 1 | 1 | 35,4 | 24,0 | 20,7 | 19,2 | 0,58 | 0,54 |
| Vergleichsbeispiel 2 | 2 | 2 | 29,4 | 22,5 | 17,6 | 16,3 | 0,60 | 0,55 |
| Vergleichsbeispiel 3 | 3 | 3 | 33,6 | 28,8 | 19 | 17,6 | 0,57 | 0,52 |
| Vergleichsbeispiel 4 | 4 | 4 | 29,6 | 10,9 | 20,2 | 19,8 | 0,68 | 0,67 |
| Vergleichsbeispiel 5 | 5 | 5 | 38,2 | 37,4 | 26,9 | 18,5 | 0,70 | 0,48 |

(fortgesetzt)

| | VA | VB | A1 | A22 | A21 80°C | F1c | A21:A1 | F1c:A1 |
|---|---|---|---|---|---|---|---|---|
| | | | Auszugsversuche Lastwerte [N/mm$^2$] | | | | Verhältnis | |
| Vergleichsbeispiel 6 | 6 | 6 | 38,8 | - | 23,9 | 20,6 | 0,62 | 0,53 |
| Vergleichsbeispiel 7 | 7 | 7 | 25,4 | - | - | - | - | - |
| Vergleichsbeispiel 8 | 7 | 8 | 15,4 | - | - | - | - | - |
| Vergleichsbeispiel 9 | 7 | 9 | 19,1 | - | - | - | - | - |
| Vergleichsbeispiel 10 | 7 | 10 | 24,5 | - | - | - | - | - |

## Patentansprüche

1. Härterzusammensetzung umfassend 3-Aminomethyl-3,5,5-trimethylcyclohexan und mindestens ein weiteres gegenüber Epoxidgruppen reaktives cycloaliphatisches Amin und wenigstens ein Salz (S),

   wobei das Salz (S) ausgewählt ist aus der Gruppe bestehend aus Salzen der Salpetersäure, Salzen der Salpetrigen Säure, Salzen der Halogene, Salzen der Trifluormethansulfonsäure und Kombinationen davon, **dadurch gekennzeichnet, dass** 3-Aminomethyl-3,5,5-trimethylcyclohexan in einem Anteil von mindestens 10 Gew.-% bezogen auf das Gesamtgewicht aller gegenüber Epoxidgruppen reaktiven Aminen in der Härterzusammensetzung enthalten ist.

2. Härterzusammensetzung nach Anspruch 1, **dadurch gekennzeichnet, dass** das weitere gegenüber Epoxidgruppen reaktive cycloaliphatische Amin mindestens eine Cyclohexylgruppe umfasst.

3. Härterzusammensetzung nach Anspruch 1 oder 2, **dadurch gekennzeichnet, dass** das weitere gegenüber Epoxidgruppen reaktive cycloaliphatische Amin ausgewählt ist aus der Gruppe bestehend aus 4-Methyl-cyclohexan-1,3-diamin, (Bicyclo[2.2.1heptanbis(methyl-amin)), 1,2-Diaminocyclohexan, 1,3-Cyclo-hexan-bis(methyl-amin), 4,4'-Methylenbis(cyclohexylamin) und Kombinationen daraus.

4. Härterzusammensetzung nach einem der vorhergehenden Ansprüche, **dadurch gekennzeichnet, dass** 3-Aminomethyl-3,5,5-trimethylcyclohexan in einem Anteil von mindestens 25 Gew.-% bezogen auf das Gesamtgewicht aller gegenüber Epoxidgruppen reaktiven Amine in der Härterzusammensetzung enthalten ist.

5. Härterzusammensetzung nach einem der vorhergehenden Ansprüche, **dadurch gekennzeichnet, dass** das Salz (S) ausgewählt ist aus der Gruppe bestehend aus Nitrat ($NO_3^-$), Iodid ($I^-$), Triflat ($CF_3SO_3^-$) sowie Mischungen daraus.

6. Härterzusammensetzung nach einem der vorhergehenden Ansprüche, **dadurch gekennzeichnet, dass** das Salz (S) ein Kation umfasst ausgewählt aus der Gruppe bestehend aus Alkalimetallen, Erdalkalimetallen, Lanthanoiden, Aluminium, Ammonium und Kombinationen davon.

7. Härterzusammensetzung nach einem der vorhergehenden Ansprüche, **dadurch gekennzeichnet, dass** das Salz (S) in einem Anteil von 0,1 bis 15 Gew.-% bezogen auf das Gesamtgewicht der Härterzusammensetzung enthalten ist.

8. Härterzusammensetzung nach einem der vorhergehenden Ansprüche, **dadurch gekennzeichnet, dass** die Härterzusammensetzung 3-Aminomethyl-3,5,5-trimethylcyclohexan und 1,3-Cyclohexan-bis(methyl-amin) umfasst.

9. Härterzusammensetzung nach einem der Ansprüche 1 bis 7, **dadurch gekennzeichnet, dass** die Härterzusammensetzung 3-Aminomethyl-3,5,5-trimethylcyclohexan und 4,4'-Methylenbis(cyclohexylamin) umfasst.

10. Epoxidharzmasse enthaltend mindestens ein härtbares Epoxidharz und eine Härterzusammensetzung nach einem der vorhergehenden Ansprüche.

11. Epoxidharzmasse nach Anspruch 10, **dadurch gekennzeichnet, dass** die Epoxidharzmasse eine Mehrkomponenten-Epoxidharzmasse ist.

12. Mehrkomponenten-Epoxidharzsystem umfassend eine Epoxidharzkomponente (A) und eine Härterkomponente, wobei die Epoxidharzkomponente (A) ein härtbares Epoxidharz enthält, und die Härterkomponente 3-Aminomethyl-3,5,5-trimethylcyclohexan und mindestens ein weiteres gegenüber Epoxidgruppen reaktives cycloaliphatisches Amin enthält, wobei 3-Aminomethyl-3,5,5-trimethylcyclohexan in einem Anteil von mindestens 10 Gew.-% bezogen auf das Gesamtgewicht aller gegenüber Epoxidgruppen reaktiven Aminen in der Härterkomponente enthalten ist und wobei ein Salz (S) ausgewählt aus Salzen der Salpetersäure, Salzen der Salpetrigen Säure, Salzen der Halogene, Salzen der Trifluormethansulfonsäure und Kombinationen davon in der Epoxidharzkomponente (A) und/oder in der Härterkomponente enthalten ist.

13. Mehrkomponenten-Epoxidharzsystem nach Anspruch 12, **dadurch gekennzeichnet, dass** das Salz (S) in der Härterkomponente enthalten ist.

14. Verfahren zur chemischen Befestigung von Konstruktionselementen in Bohrlöchern, wobei zur chemischen Befestigung eine Epoxidharzmasse nach Anspruch 10 oder 11 oder ein Mehrkomponenten-Epoxidharzsystem Anspruch 12 oder 13 verwendet wird.

15. Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse umfassend 3-Aminomethyl-3,5,5-trimethylcyclohexan und mindestens ein weiteres gegenüber Epoxidgruppen reaktives cycloaliphatisches Amin zur chemischen Befestigung.

**Claims**

1. Hardener composition comprising 3-aminomethyl-3,5,5-trimethylcyclohexane, at least one further cycloaliphatic amine which is reactive to epoxy groups, and at least one salt (S),

   the salt (S) being selected from the group consisting of salts of nitric acid, salts of nitrous acid, salts of halogens, salts of trifluoromethanesulfonic acid, and combinations thereof,
   **characterized in that** 3-aminomethyl-3,5,5-trimethylcyclohexane is contained in the hardener composition in a proportion of at least 10 wt.%, based on the total weight of all amines which are reactive to epoxy groups.

2. Hardener composition according to claim 1, **characterized in that** the further cycloaliphatic amine which is reactive to epoxy groups comprises at least one cyclohexyl group.

3. Hardener composition according to either claim 1 or claim 2, **characterized in that** the further cycloaliphatic amine which is reactive to epoxy groups is selected from the group consisting of 4-methyl-cyclohexane-1,3-diamine, (bicyclo[2.2.1]heptanebis(methyl-amine)), 1,2-diaminocyclohexane, 1,3-cyclohexane-bis(methyl-amine), 4,4'-methylenebis(cyclohexylamine), and combinations thereof.

4. Hardener composition according to any of the preceding claims, **characterized in that** 3-aminomethyl-3,5,5-trimethylcyclohexane is contained in the hardener composition in a proportion of at least 25 wt.%, based on the total weight of all amines which are reactive to epoxy groups.

5. Hardener composition according to any of the preceding claims, **characterized in that** the salt (S) is selected from the group consisting of nitrate ($NO_3^-$), iodide ($I^-$), triflate ($CF_3SO_3^-$), and combinations thereof.

6. Hardener composition according to any of the preceding claims, **characterized in that** the salt (S) comprises a cation selected from the group consisting of alkali metals, alkaline earth metals, lanthanoids, aluminum, ammonium, and combinations thereof.

7. Hardener composition according to any of the preceding claims, **characterized in that** the salt (S) is contained in a proportion of from 0.1 to 15 wt.%, based on the total weight of the hardener composition.

8. Hardener composition according to any of the preceding claims, **characterized in that** the hardener composition comprises 3-aminomethyl-3,5,5-trimethylcyclohexane and 1,3-cyclohexane-bis(methyl-amine).

9. Hardener composition according to any of claims 1 to 7, **characterized in that** the hardener composition comprises 3-aminomethyl-3,5,5-trimethylcyclohexane and 4,4'-methylenebis(cyclohexylamine).

10. Epoxy resin composition containing at least one curable epoxy resin and a hardener composition according to any of the preceding claims.

11. Epoxy resin composition according to claim 10, **characterized in that** the epoxy resin composition is a multi-component epoxy resin composition.

12. Multi-component epoxy resin system comprising an epoxy resin component (A) and a hardener component, wherein the epoxy resin component (A) contains a curable epoxy resin, and the hardener component contains 3-aminomethyl-3,5,5-trimethylcyclohexane and at least one further cycloaliphatic amine which is reactive to epoxy groups, wherein 3-aminomethyl-3,5,5-trimethylcyclohexane is contained in the hardener component in a proportion of at least 10 wt.%, based on the total weight of all amines which are reactive to epoxy groups, and wherein a salt (S) selected from salts of nitric acid, salts of nitrous acid, salts of halogens, salts of trifluoromethanesulfonic acid and combinations thereof is contained in the epoxy resin component (A) and/or in the hardener component.

13. Multi-component epoxy resin system according to claim 12, **characterized in that** the salt (S) is contained in the hardener component.

14. Method for the chemical fastening of construction elements in boreholes, wherein an epoxy resin composition according to either claim 10 or claim 11 or a multi-component epoxy resin system according to either claim 12 or claim 13 is used for the chemical fastening.

15. Use of at least one salt (S) selected from the group consisting of salts of nitric acid, salts of nitrous acid, salts of halogens, salts of trifluoromethanesulfonic acid and combinations thereof as an accelerator in an epoxy resin composition comprising 3-aminomethyl-3,5,5-trimethylcyclohexane and at least one further cycloaliphatic amine which is reactive to epoxy groups, for the purpose of chemical fastening.

**Revendications**

1. Composition de durcisseur comprenant du 3-aminométhyl-3,5,5-triméthylcyclohexane, au moins une autre amine cycloaliphatique réactive avec les groupes époxy et au moins un sel (S),

dans laquelle le sel (S) est choisi dans le groupe constitué par les sels d'acide nitrique, les sels d'acide nitreux, les sels d'halogènes, les sels d'acide trifluorométhanesulfonique et leurs combinaisons, **caractérisée en ce que** le 3-aminométhyl-3,5,5-triméthylcyclohexane est présent dans la composition de durcisseur en une proportion d'au moins 10 % en poids par rapport au poids total de toutes les amines réactives avec les groupes époxy.

2. Composition de durcisseur selon la revendication 1, **caractérisée en ce que** l'autre amine cycloaliphatique réactive avec les groupes époxy comprend au moins un groupe cyclohexyle.

3. Composition de durcisseur selon la revendication 1 ou 2, **caractérisée en ce que** l'autre amine cycloaliphatique réactive avec les groupes époxy est choisie dans le groupe constitué par la 4-méthyl-cyclohexane-1,3-diamine, la (bicyclo[2.2.1]heptanebis(méthyl-amine)), le 1,2-diaminocyclohexane, la 1,3-cyclohexanebis(méthyl-amine), la 4,4'-méthylènebis(cyclohexylamine) et leurs combinaisons.

4. Composition de durcisseur selon l'une des revendications précédentes, **caractérisée en ce que** le 3-aminométhyl-3,5,5-triméthylcyclohexane est présent dans la composition de durcisseur en une proportion d'au moins 25 % en poids par rapport au poids total de toutes les amines réactives avec les groupes époxy.

5. Composition de durcisseur selon l'une des revendications précédentes, **caractérisée en ce que** le sel (S) est choisi dans le groupe constitué par le nitrate ($NO_3^-$), l'iodure ($I^-$), le triflate ($CF_3SO_3^-$) et leurs mélanges.

6. Composition de durcisseur selon l'une des revendications précédentes, **caractérisée en ce que** le sel (S) comprend un cation choisi dans le groupe constitué par les métaux alcalins, les métaux alcalino-terreux, les lanthanides, l'aluminium, l'ammonium et leurs combinaisons.

7. Composition de durcisseur selon l'une des revendications précédentes, **caractérisée en ce que** le sel (S) est présent en une proportion de 0,1 à 15 % en poids par rapport au poids total de la composition de durcisseur.

8. Composition de durcisseur selon l'une des revendications précédentes, **caractérisée en ce que** la composition de durcisseur comprend du 3-aminométhyl-3,5,5-triméthylcyclohexane et de la 1,3-cyclohexane-bis(méthyl-amine).

9. Composition de durcisseur selon l'une des revendications 1 à 7, **caractérisée en ce que** la composition de durcisseur comprend du 3-aminométhyl-3,5,5-triméthylcyclohexane et de la 4,4'-méthylènebis(cyclohexylamine).

10. Masse de résine époxy contenant au moins une résine époxy durcissable et une composition de durcisseur selon l'une des revendications précédentes.

11. Masse de résine époxy selon la revendication 10, **caractérisée en ce que** la masse de résine époxy est une masse de résine époxy à plusieurs composants.

12. Système de résine époxy à plusieurs composants comprenant un composant de résine époxy (A) et un composant de durcisseur, le composant de résine époxy (A) contenant une résine époxy durcissable, et le composant de durcisseur contenant du 3-aminométhyl-3,5,5-triméthylcyclohexane et au moins une autre amine cycloaliphatique réactive avec les groupes époxy, le 3-aminométhyl-3,5,5-triméthylcyclohexane étant présent en une proportion d'au moins 10 % en poids par rapport au poids total de toutes les amines réactives avec les groupes époxy dans le composant de durcisseur, et un sel (S) choisi parmi les sels d'acide nitrique, les sels d'acide nitreux, les sels d'halogènes, les sels d'acide trifluorométhanesulfonique et leurs combinaisons étant présent dans le composant de résine époxy (A) et/ou dans le composant de durcisseur.

13. Système de résine époxy à plusieurs composants selon la revendication 12, **caractérisé en ce que** le sel (S) est contenu dans le composant de durcisseur.

14. Procédé permettant la fixation chimique d'éléments de construction dans des trous de forage, dans lequel une masse de résine époxy selon la revendication 10 ou 11 ou un système de résine époxy à plusieurs composants selon la revendication 12 ou 13 est utilisé(e) pour la fixation chimique.

15. Utilisation d'au moins un sel (S) choisi dans le groupe constitué par les sels d'acide nitrique, les sels d'acide nitreux, les sels d'halogènes, les sels d'acide trifluorométhanesulfonique et leurs combinaisons en tant qu'accélérateur dans une masse de résine époxy comprenant du 3-aminométhyl-3,5,5-triméthylcyclohexane et au moins une autre amine cycloaliphatique réactive avec les groupes époxy pour la fixation chimique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2826798 A1

- EP 3000792 A1

**In der Beschreibung aufgeführte Nicht-Patentliteratur**

- IUPAC Compendium of Chemical Terminology. **A. D. MCNAUGHT ; A. WILKINSON.** Gold Book. Blackwell Scientific Publications, 1997

- **MICHAEL DORNBUSCH ; ULRICH CHRIST ; ROB RASING.** Epoxidharze. Vincentz Network GmbH & Co KG, 2015
- *CHEMICAL ABSTRACTS,* 56-81-5